# EUROPEAN PATENT APPLICATION

(11) **EP 4 578 697 A1**
(43) Date of publication of application: **02.07.2025**
(21) Application number: 24183304.5
(22) Date of filing: 20.06.2024
(51) Int. Cl.: B60K 35/29, B60K 35/50

(54) **COCKPIT SYSTEM AND METHOD OF CONTROLLING SAME**

(30) Priority: 28.12.2023 KR 20230195050
(71) Applicant: Hyundai Mobis Co., Ltd., Gangnam-gu Seoul 06141 (KR)
(72) Inventor: KIM, Kyung Hoon, 13600 Seongnam-si (KR)
(74) Representative: Vossius & Partner Patentanwälte Rechtsanwälte mbB

(57) **Abstract**

A cockpit system for a vehicle and a method therefore are provided. The cockpit system includes: a front display disposed in front of a driver's seat and a passenger seat of the vehicle, the front display including one or more display areas; an operating system to receive an operation signal from a driver in the driver's seat or a passenger in the passenger seat; a camera to monitor presence, absence, or movement of the driver in the driver's seat or the passenger in the passenger seat; and a controller to control at least one display among the one or more displays of the front display, or control the operating system in conjunction with the camera.

## Description

### CROSS-REFERENCE TO RELATED APPLICATION(S)

This application claims the benefit under to Korean Patent Application No. 10-2023-0195050, which was filed in the Korean Intellectual Property Office on December 28, 2023, the entire disclosure of which is incorporated herein by reference for all purposes.

### BACKGROUND

### 1. Field

The embodiments relate to a display in a vehicle (e.g., an automobile, a mobile device, a mobility device, etc.) or an uncrewed aerial vehicle (UAV), and more particularly, to a cockpit system including a display.

### 2. Description of the Related Art

As vehicles have become digital in recent years, many controllers are mounted in a vehicle, and various communication functions between the controllers allow the vehicle to be located remotely and discover a nearby charging station via the Internet or a smartphone. In addition, all information about the current state of the vehicle is checked in real time, such as battery charging or pre-conditioning, with a simple touch on a button. Further, an intelligent driving assistance system acquires information about road driving to build a driving environment more convenient for the driver.

In this regard, a cluster is used, which provides the basic functions of the vehicle, such as a driving speed, a mileage, an odometer, and an engine RPM dashboard. For example, the cluster provides charging infrastructure network information, a distance to empty (DTE), a current battery state, information output, and other accurate and convenient vehicle information required for a driving environment.

In particular, vehicles have recently used digital clustering of various digital cockpits to effectively represent vehicle information. Therefore, there is a need to develop a technique for handling these digital cockpits in an integrated manner.

### SUMMARY

The disclosure is intended to address the above-described problems. According to embodiments, settings of a front display or an operating system may be controlled depending on whether there is a passenger or not.

Additionally, according to an embodiment of the disclosure, a passenger may be prevented from arbitrarily operating a driver screen by detecting the passenger's approach to the driver screen through a camera.

Specifically, an embodiment of the disclosure proposes a low mode to secure a driver's forward vision, and a system for implementing a see-through display which may provide information to a driver and a passenger by transmitting light from a lower area of a front display, even in the low mode.

The objects to be achieved by the disclosure are not limited to the above-described technical objects, and those skilled in the art will clearly understand other unmentioned technical objects from the following description.

In a general aspect of the disclosure, a cockpit system provided in a vehicle, includes: a front display disposed in front of a driver's seat and a passenger seat of the vehicle, the front display including display areas; an operating system configured to receive an operation signal from a driver in the driver's seat or a passenger in the passenger seat; a camera configured to monitor presence, absence, or movement of the driver in the driver's seat or the passenger in the passenger seat; and a controller configured to control at least one display among the plurality of displays of the front display, or control the operating system in conjunction with the camera.

The display areas of the front display may include a first shy button, a first in-vehicle infotainment (IVI) display, a second IVI display, and a second shy button.

The controller may be further configured to: determine whether the passenger is present in the passenger seat through the camera; and in response to a determination that the passenger is not present in the passenger seat, deactivate the second IVI display or control the second IVI display and the first IVI display to be displayed as one display in conjunction with each other.

The controller may be further configured to: determine whether the passenger is present in the passenger seat through the camera; and in response to a determination that the passenger is present in the passenger seat, activate the second IVI display and enable the second IVI display to receive a control signal independently of the first IVI display.

In response to the determination through the camera that the passenger has operated the first IVI display, the controller may be further configured not to input a signal of the operation to the first IVI display.

In response to the determination through the camera and the front display that the driver has applied a same input as a preset touch input on the first IVI display, the controller may be further configured to: control a first area of the first IVI display to receive operations of the driver and the passenger; and control; a second area of the first IVI display to receive only an operation signal of the driver.

The controller may be further configured to: determine whether a passenger is present in the passenger seat through the camera; deactivate a passenger operating system area of the operating system in response to a determination that the passenger is not present in the passenger seat; and activate a passenger operating system area of the operating system in response to a determination that the passenger is present in the passenger seat.

The controller may be further configured to: determine whether the passenger is present in the passenger seat through the camera; deactivate the second shy button, upon a determination that the passenger is not present in the passenger seat; and activate the second shy button, upon a determination that the passenger is present in the passenger seat.

The controller may be further configured to move the front display downward based on a low signal among operation signals, and the cockpit system may further include a see-through panel configured to provide information to the driver and the passenger by transmitting light from a lower area of the front display after the front display is moved downward.

In another general aspect of the disclosure, a method of controlling a cockpit system in a vehicle, the cockpit system including a front display including a first in-vehicle infotainment (IVI) display, and a second IVI display, the method includes: determining through a camera whether a passenger is present in a passenger seat; in response to a determination that the passenger is present in the passenger seat, activating the second in-vehicle infotainment (IVI) display and controlling the second IVI display to receive a control signal independently of the first IVI display; and in response to a determination that the passenger is not present in the passenger seat, deactivating the second IVI display or controlling the second IVI display and the first IVI display as one display in conjunction with each other.

The front display may further include: a first shy button for providing a function that may be used by the driver; and a second shy button, for providing a function that may be used by the passenger.

The method may further include: deactivating the second shy button in response to a determination that the passenger is not present in the passenger seat; and activating the second shy button in response to a determination that the passenger is present in the passenger seat.

In yet another general aspect of the disclosure, a cockpit system for a vehicle, includes: a front display disposed in front of a driver's seat and a passenger seat of the vehicle, the front display including a plurality of display areas; an operating system configured to receive an operation signal from a driver in the driver's seat or a passenger in the passenger seat; a camera configured to monitor at least one of the driver is in the driver's seat, the passenger in the passenger seat, or a combination thereof; and a controller configured to: determine through the camera, the presence, absence, or movement of at least one of the driver in the driver's seat, the passenger in the passenger seat, or a combination thereof; and at least one of, control at least one display among the plurality of displays of the front display, control the operating system in conjunction with the camera, or a combination thereof.

The front display may include a first in-vehicle infotainment (IVI) display, and a second IVI display.

The controller may be further configured to: in response to a determination that the passenger is present in the passenger seat, activate the second in-vehicle infotainment (IVI) display and control the second IVI display to receive a control signal independently of the first IVI display; and in response to a determination that the passenger is not present in the passenger seat, deactivate the second IVI display or control the second IVI display and the first IVI display to be displayed as a single display.

The front display may include a first shy button near the driver's seat and a second shy button near the passenger seat.

The controller may be further configured to: determine whether the passenger is present in the passenger seat through the camera; deactivate the second shy button, upon a determination that the passenger is not present in the passenger seat; and activate the second shy button, upon a determination that the passenger is present in the passenger seat.

The vehicle may include at least one of an automobile, a mobile device, a mobility device, or any combination thereof.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram illustrating an exemplary configuration of a cockpit system according to an embodiment of the disclosure;
FIGS. 2 and 3 are diagrams illustrating changes of a front display depending on whether there is a passenger according to an embodiment of the disclosure;
FIG. 4 is a diagram illustrating a method of configuring a shared area of a front display according to an embodiment of the disclosure;
FIG. 5 is a diagram illustrating display or non-display of an operating system depending on whether there is a passenger according to an embodiment of the disclosure;
FIG. 6 is a diagram illustrating control of a front display according to an embodiment of the disclosure; and
FIG. 7 is a diagram illustrating a see-through panel according to an embodiment of the disclosure.

### DETAILED DESCRIPTION

Embodiments of the disclosure will be described in detail with reference to the attached drawings, so that those skilled in the art may easily implement the disclosure. However, the disclosure may be implemented in many different forms and is not limited to the embodiments described herein. In order to clearly describe the disclosure in the drawings, parts not related to the description are omitted, and similar reference numerals are assigned to similar components throughout the specification.

Throughout the specification, when a part is said to "include" a certain element, this means that it may further include other elements rather than excluding them, unless otherwise specified.

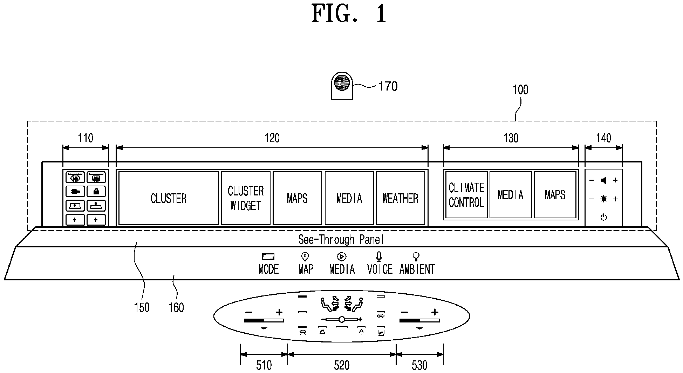

FIG. 1 is a diagram illustrating an exemplary configuration of a cockpit system according to an embodiment of the disclosure.

It is assumed that a front display 100 illustrated in FIG. 1 is disposed in front of a driver's seat and a passenger seat in a mobile device. In other words, the front display 100 is preferably disposed across the front of the passenger seat as well as the front of the driver's seat in the mobile device.

Additionally, the front display according to the embodiment illustrated in FIG. 1 may include a plurality of display areas 110, 120, 130, and 140. While the plurality of display areas 110, 120, 130, and 140 are shown in FIG. 1 as specifically including a first shy button 110, a first in-vehicle infotainment (IVI) display 120, a second IVI display 130, and a second shy button 140, they may be configured in various other forms.

The shy buttons 110 and 140 generally refer to buttons configured to be recognized in a user's field of view, only when needed. In the example of FIG. 1, the first shy button 110 is a shy button providing a function (e.g., a driving control-related function) that the driver may use, when needed, and the second shy button 140 is a shy button providing a function (e.g., a function related to music playback) that a passenger in the passenger seat may use, when needed.

The first IVI display 120 may play a cluster related to the driver's driving, a cluster widget, a map, media, and a weather-related application, and reset an area in which an application is displayed according to the driver's (or passenger's) operation or condition settings.

The second IVI display 130 may display applications that may be controlled by the passenger, such as weather-related control, media, and a map.

However, the configuration of the display described above is an example, and the corresponding areas may be integrally displayed according to the driver/passenger's operation or condition settings. For example, in the absence of a passenger, a single integrated image may be displayed on the first IVI display 120 and the second IVI display 130, as described later.

In an embodiment of the disclosure, it is proposed to support a low mode to secure the driver's forward vision among display modes. During a low-mode operation, the front display 100 described above may be moved downward by a controller (not shown).

In an embodiment of the disclosure, it is further proposed to include a see-through panel 150 as illustrated in FIG. 1. As described above, the front display 100 may be configured such that when the front display 100 is moved downward by applying the low mode, light from a lower area of the front display 100 provides information to the driver and the passenger through the see-through panel 150.

It is assumed that the information provided through the see-through panel 150 corresponds to a screen displayed through each of the first shy button 110, the first IVI display 120, the second IVI display 130, and the second shy button 140. However, the information provided through the see-through panel 150 is preferably simplified information, compared to information displayed on an upper part of the front display 100. "Simplified information" may refer to information that may be implemented at a low resolution, in a small amount, or in a combination of both, compared to information displayed in the upper part of the front display 100.

As illustrated in FIG. 1, the cockpit system according to an embodiment of the disclosure may further include an operating system 160. The operating system 160 may be implemented in a projection manner.

In the embodiment illustrated in FIG. 1, the operating system is shown as divided into a driver operating system 510, an HVAC operator 520, and a passenger operating system 530. In addition, an upper part of the operating system includes an operation button unit 540 displayed in the form of a shortcut, and the position of the shortcut is preferably exchanged with the position of an animation form in a lower part.

As illustrated in FIG. 1, the cockpit system according to an embodiment of the disclosure may further include a camera 170. The camera 170 may be disposed at a position to enable monitoring of the driver's seat and the passenger seat. As long as it is capable of monitoring, any type of camera may be used.

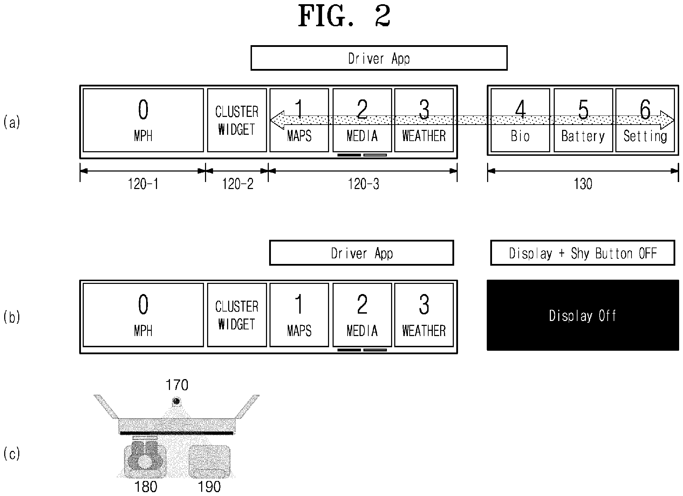

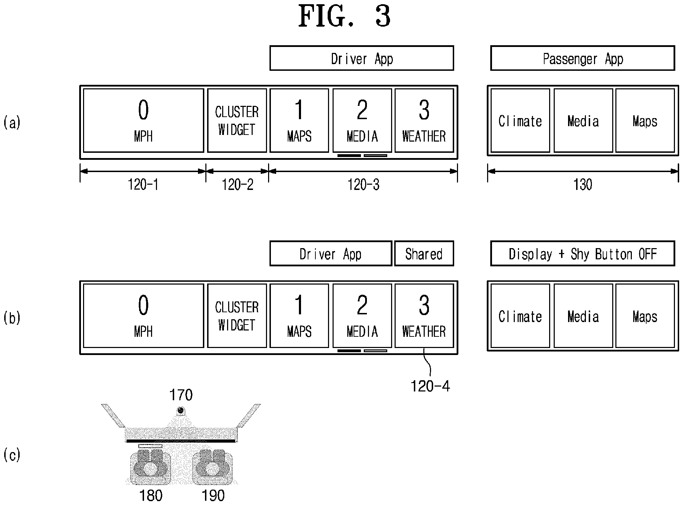

FIGS. 2 and 3 are diagrams illustrating changes of the front display in the presence and absence of a passenger in an embodiment of the disclosure. FIG. 2 illustrates settings of the front display when there is only a driver without a passenger, and FIG. 3 illustrates settings of the front display when there is a driver and a passenger.

First, FIG. 2(c) is a simplified view illustrating monitoring of a driver's seat 180 and a passenger seat 190 through an in-cabin monitoring (ICM) camera. As illustrated in FIG. 2(c), the camera may monitor the driver's seat and the passenger seat to allow a controller to determine whether each seat is occupied. FIG. 2(c) illustrates a case in which only the driver is seated in the driver's seat 180 and no passenger is present.

As illustrated in FIG. 2(a), when determining that there is no passenger, the controller (not shown) may control the first IVI display 120 and the second IVI display 130 as one display in conjunction with each other. That is, since there is no passenger, screens on the front display may be aligned based on the driver, thereby increasing use convenience. The second shy button 140 close to the passenger seat may be inactive.

FIG. 2(a) illustrates an example in which the first IVI display 120 is displayed separately into a cluster 120-1, a cluster widget 120-2, and an IVI 120-3.

Specifically, the cluster 120-1 may display a cluster screen related to driving information, for example, driving navigation information, a vehicle speed, a driving distance, a battery state of an electric vehicle, and so on.

The cluster widget 120-2 may display information in the form of a widget. For example, warning information, virtual personal assistant (VPA), turn by turn (TBT), an informational widget, and so on may be represented. However, this is an exemplary configuration, to which the disclosure is not limited.

Additionally, the IVI 120-3 may provide an IVI display for the driver along with the second IVI display 130 for the passenger seat, as described above. While maps, media, weather biorhythms, a battery state, and settings information are provided in the example in FIG. 2, this is an exemplary configuration, to which the disclosure is not limited. Apps may also be reordered or relocated by dragging or touching in arrowed directions illustrated in FIG. 2(a). In this case, obviously, the IVI part of the first IVI display and the second IVI display move as a single screen.

As illustrated in FIG. 2(b), the second IVI display 130 may be deactivated, when there is only the driver without a passenger. In this case, the second shy button 140 close to the passenger seat may also be inactive.

FIG. 3(c) is a simplified view illustrating monitoring of the driver's seat 180 and the passenger seat 190 with an ICM camera. As illustrated in FIG. 3(c), the camera may monitor the driver's seat 180 and the passenger seat 190 to allow the controller to determine whether each seat is occupied. FIG. 3(c) illustrates an example in which a driver and a passenger are seated in the driver's seat 180 and the passenger seat 190.

As illustrated in FIG. 3(a), when determining that there is a passenger, the controller (not shown), e.g., one or more processors, may set the first IVI display 120 to the driver's home screen, and the second IVI display 130 to the passenger's home screen. Each display may be controlled by a touch and operated independently. That is, when there is a passenger, an IVI display may be provided for the passenger. Furthermore, the driver may operate a necessary app within the first IVI display. The second shy button 140 close to the passenger seat may be active.

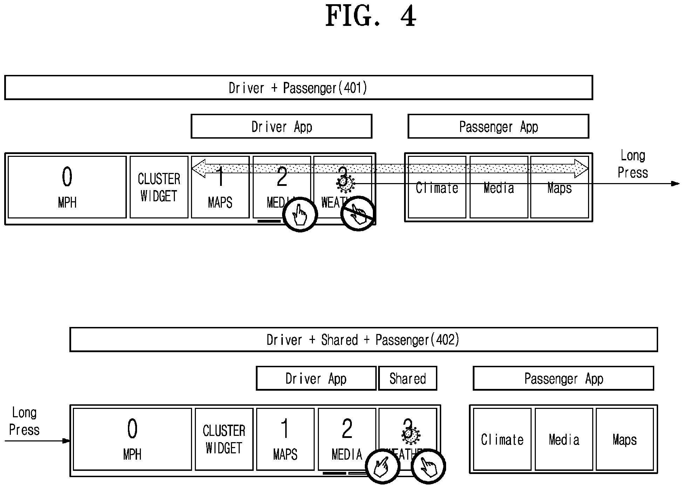

As illustrated in FIG. 3(b), when there are a driver and a passenger, a shared area may be set, which may be operated by both the driver and the passenger. This will be described in more detail with reference to FIG. 4.

FIG. 4 is a diagram illustrating a method of configuring a shared area on a front display according to an embodiment of the disclosure. FIG. 4 illustrates control of a first IVI display and a second display in the presence of a driver and a passenger, and configuration of a shared area in the presence of a driver and a passenger.

First, when there are a driver and a passenger (401), it may be a safety hazard for the passenger to arbitrarily change a screen on which the driver receives information while driving. In this case, the controller may use a camera to determine whether the passenger approaches the driver's side and operates the first IVI display. When the controller determines that the passenger operates the first IVI display, the controller may prevent an operation signal from being input. That is, the first IVI display may be configured to be operated only by the driver and not by the passenger.

On the other hand, the driver may authorize the passenger to operate a certain area of the first IVI display. In this case, an input for the permission of the driver may be activated, when it is the same as a preset touch input for the camera and the front display. For example, a long touch on or a drag of an area or app to be allowed in a certain direction may set the area or app as an area accessible to the passenger (402). In this case, the area set as a shared area may accept inputs from both the driver and the passenger, while the remaining area of the first IVI display may still restrictively accept only a driver input.

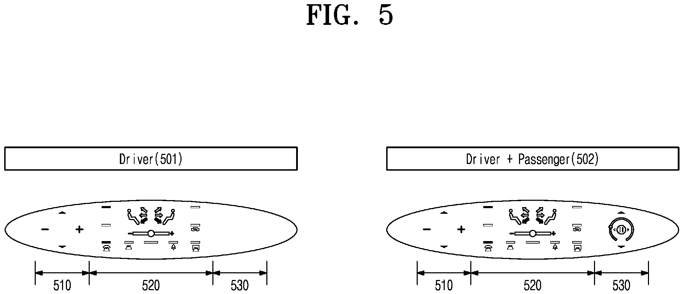

FIG. 5 is a diagram illustrating display or non-display of the operating system 160 depending on whether there is a passenger in an embodiment of the disclosure.

In the embodiment illustrated in FIG. 5, the operating system is shown as separated into the driver operating system 510, the HVAC operator 520, and the passenger operating system 530. The operating system 160 may be implemented in a projection manner.

When determining through the camera that only the driver is present (501), the controller may display only the driver operating system 510 and the HVAC operator 520 without displaying the passenger operating system 530.

When determining through the camera that both the driver and the passenger are present (502), the controller may display all of the driver operating system 510, the HVAC operator 520, and the passenger operating system 530.

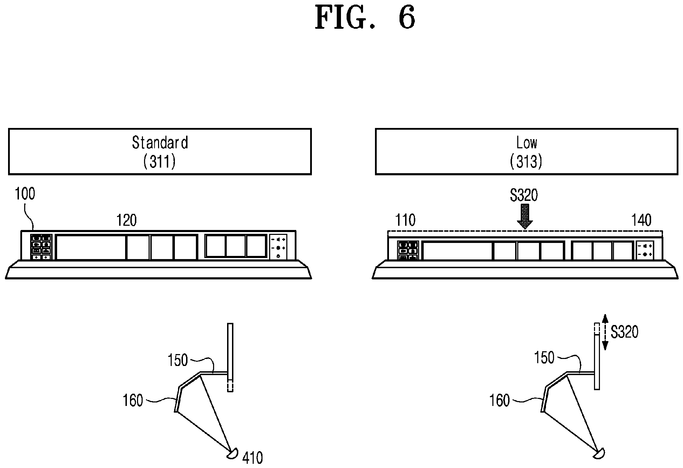

FIG. 6 is a diagram illustrating control of a front display according to an embodiment of the disclosure.

First, in the embodiment illustrated in FIG. 6, a display position in the standard mode 311 is preferably set to a height at which the bottom line of a display active area of the first IVI display on the forward display 100 is not covered by the see-through panel 150.

Next, in the embodiment illustrated in FIG. 6, the low mode 313 is applied based on a low signal, and the front display may be moved downward to secure a forward vision (S320). In this case, it may be configured to provide simplified information by light emitted from the bottom of the display through the see-through panel 150, as described above.

In an embodiment of the disclosure, in the low mode 313, there are areas in lower parts of the shy buttons 110 and 140, which are covered due to the downward movement of the display, and in view of the nature of the shy buttons 110 and 140, it may not be efficient to use light from the bottom of the shy buttons 110 and 140 to provide information through the see-through panel 150. Accordingly, the shy buttons 110 and 140 may be configured such that the position of an existing shy button is maintained in an area that is not covered in the low mode 313, unlike the IV displays 120 and 130.

FIG. 6 illustrates an embodiment in which the operating system 160 is implemented in a projection manner using an internal projector410. To implement a display-type operating system 160, a light-emitting display such as a light emitting diode (LED) display may be used. However, there are many curves/curved surfaces in the interior space of the mobile device, specifically a vehicle, and the light-emitting display is difficult to implement in consideration of the interior characteristics.

Therefore, in an embodiment of the disclosure, the operating system 160 may be configured in a projection manner using the internal projector 410 at the front of the mobile device. As illustrated in FIG. 6, the operating system 160 may be advantageously implemented freely even in a space with various curves/curved surfaces.

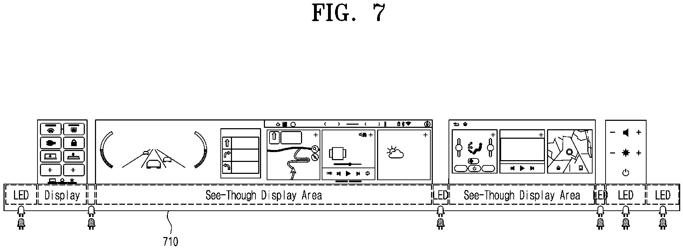

FIG. 7 is a diagram illustrating a see-through panel according to an embodiment of the disclosure.

The front display is configured to be moved downward and provide additional information by light emitted from the lower area of the front display through a see-through panel 710, as the low mode is applied.

Preferably, a display through the see-through panel 710 displays more simplified information than in the upper part of the forward display and provides a subdued color as a background colorto provide comfort to the driver/passenger. However, when information provided through the see-through panel 710 delivers a warning message to the driver/passenger, the see-through display is performed preferably in an intense color that may provide alertness.

In the embodiment of FIG. 7, there are areas in lower parts of the shy buttons 110 and 140 in the low mode, which are covered due to the downward movement of the display, and in view of the nature of the shy buttons 110 and 140, it may not be efficient to use light from the bottoms of the shy buttons 110 and 140 to provide information through the see-through panel 150. Accordingly, it is proposed that the shy buttons 110 and 140 are configured such that the arrangement of buttons is changed to maintain existing functions of the shy buttons in areas that are not covered in the low mode 313, unlike the IVI displays 120 and 130.

Additionally, the embodiment of FIG. 7 proposes that a separate light-emitting display (e.g., an LED display) is disposed in an area in which a see-through display through the see-through panel 710 may not be performed, in a border area between a plurality of display areas. This light-emitting display 720 may be configured to provide additional information, and serve as an indoor mood light together with the see-through display area 710, as illustrated in FIG. 7.

According to the above-described embodiments of the disclosure, a method of changing a cockpit layout according to a display mode and a cockpit system using the same may be efficiently configured.

Use convenience during driving may be significantly increased by controlling settings of a front display or an operating system depending on whether there is a passenger.

Further, according to an embodiment of the disclosure, a passenger may be prevented from arbitrarily operating a driver screen by detecting the passenger's approach to the driver screen through a camera. The resulting prevention of a dangerous situation during driving may increase safety.

Specifically, in an embodiment of the disclosure, the forward vision of a driver may be easily secured through a low mode even during a driving mode, and information may also be provided to the driver and a passenger by transmitting light from a lower area of the front display through a see-through display even in the low mode.

As described above, a detailed description of preferred embodiments of the disclosure has been given to enable those skilled in the art to implement and practice the disclosure. While the above description has been made with reference to the preferred embodiments of the disclosure, it will be understood by those skilled in the art that various modifications and changes may be made to the disclosure without departing from the scope of the disclosure. For example, those skilled in the art may use the configurations described in the above-described embodiments in combination with each other.

Accordingly, the embodiments as set forth herein are not intended to limit the disclosure, but rather to give the broadest possible scope consistent with the principles and novel features disclosed herein.

## Claims

1. A cockpit system provided in a vehicle, comprising:
a front display disposed in front of a driver's seat and a passenger seat of the vehicle, the front display including a plurality of display areas;
an operating system configured to receive an operation signal from a driver in the driver's seat or a passenger in the passenger seat;
a camera configured to monitor presence, absence, or movement of the driver in the driver's seat or the passenger in the passenger seat; and
a controller configured to control at least one display among the plurality of displays of the front display, or control the operating system in conjunction with the camera.

2. The cockpit system of claim 1, wherein the plurality of display areas of the front display includes a first shy button, a first in-vehicle infotainment (IVI) display, a second IVI display, and a second shy button.

3. The cockpit system of claim 2, wherein the controller is further configured to:
determine whether the passenger is present in the passenger seat through the camera; and
in response to a determination that the passenger is not present in the passenger seat, deactivate the second IVI display or control the second IVI display and the first IVI display to be displayed as one display in conjunction with each other.

4. The cockpit system of claim 2, or 3, wherein the controller is further configured to:
determine whether the passenger is present in the passenger seat through the camera; and
in response to a determination that the passenger is present in the passenger seat, activate the second IVI display and enable the second IVI display to receive a control signal independently of the first IVI display.

5. The cockpit system of claim 4, wherein in response to the determination through the camera that the passenger has operated the first IVI display, the controller is further configured not to input a signal of the operation to the first IVI display.

6. The cockpit system of claim 4, wherein in response to the determination through the camera and the front display that the driver has applied a same input as a preset touch input on the first IVI display, the controller is further configured to:
control a first area of the first IVI display to receive operations of the driver and the passenger; and
control; a second area of the first IVI display to receive only an operation signal of the driver.

7. The cockpit system of any one of claims 1 to 6, wherein the controller is further configured to:
determine whether a passenger is present in the passenger seat through the camera;
deactivate a passenger operating system area of the operating system in response to a determination that the passenger is not present in the passenger seat; and
activate a passenger operating system area of the operating system in response to a determination that the passenger is present in the passenger seat.

8. The cockpit system of any one of claim 2 to 7, wherein the controller is further configured to:
determine whether the passenger is present in the passenger seat through the camera;
deactivate the second shy button, upon a determination that the passenger is not present in the passenger seat; and
activate the second shy button, upon a determination that the passenger is present in the passenger seat.

9. The cockpit system of any one of claims 1 to 8,
wherein the controller is further configured to move the front display downward based on a low signal among operation signals, and
wherein the cockpit system further comprises a see-through panel configured to provide information to the driver and the passenger by transmitting light from a lower area of the front display after the front display is moved downward.

10. A method of controlling a cockpit system in a vehicle, the cockpit system including a front display including a first in-vehicle infotainment (IVI) display, and a second IVI display, the method comprising:
determining through a camera whether a passenger is present in a passenger seat;
in response to a determination that the passenger is present in the passenger seat, activating the second in-vehicle infotainment (IVI) display and controlling the second IVI display to receive a control signal independently of the first IVI display; and
in response to a determination that the passenger is not present in the passenger seat, deactivating the second IVI display or controlling the second IVI display and the first IVI display as one display in conjunction with each other.

11. The method of claim 10, wherein the front display further comprises:
a first shy button for providing a function that may be used by the driver; and
a second shy button, for providing a function that may be used by the passenger.

12. The method of claim 11,
wherein the method further comprises:
deactivating the second shy button in response to a determination that the passenger is not present in the passenger seat; and
activating the second shy button in response to a determination that the passenger is present in the passenger seat.
